## Europäisches Patentamt
## European Patent Office
## Office européen des brevets

(19)

(11) Numéro de publication: **0 258 077**
**A1**

(12)
# DEMANDE DE BREVET EUROPEEN

(21) Numéro de dépôt: **87401591.0**

(22) Date de dépôt: **07.07.87**

(51) Int. Cl.⁴: **C 04 B 35/46**
H 01 G 4/12, H 01 B 3/12

(30) Priorité: **25.07.86 FR 8610823**

(43) Date de publication de la demande:
**02.03.88 Bulletin 88/09**

(84) Etats contractants désignés: **DE GB IT NL**

(71) Demandeur: **COMPAGNIE EUROPEENNE DE COMPOSANTS ELECTRONIQUES LCC
50, rue Jean -Pierre Timbaud B.P. 301
F-92402 Courbevoie (FR)**

(72) Inventeur: **Beauger, Alain
THOMSON-CSF SCPI 19, avenue de Messine
F-75008 Paris (FR)**

**Rossello, Alain
THOMSON-CSF SCPI 19, avenue de Messine
F-75008 Paris (FR)**

(74) Mandataire: **Guérin, Michel et al
THOMSON-CSF SCPI 19, avenue de Messine
F-75008 Paris (FR)**

(54) **Composition céramique diélectrique à base de titanate de baryum stable en fonction de la température, et condensateur utilisant cette composition.**

(57) La présente invention concerne une composition céramique diélectrique constituée d'un mélange comportant de 80 à 93,5 % en poids de titanate de baryum, de 1 % à 5 % en poids de titanate de bismuth, de 0,5 à 3 % en poids d'oxyde de néodyme, de 0 à 0,75 % en poids d'adjuvant et de 5 à 15 % en poids d'une phase stabilisée du type $Ba(Bi_{1-x}Pb_x)_4Ti_4O_{15}$ et/ou $Ba_2(Bi_{1-x}Pb_x)_4 Ti_5O_{18}$, $x$ variant de 0 à 0,3 et l'ensemble étant choisi pour faire 100 % en poids.

Cette composition peut être utilisée pour la fabrication de condensateurs.

EP 0 258 077 A1

## Description

COMPOSITION CERAMIQUE DIELECTRIQUE A BASE DE TITANATE DE BARYUM STABLE EN FONCTION DE LA TEMPERATURE ET CONDENSATEUR UTILISANT CETTE COMPOSITION

La présente invention concerne une composition céramique diélectrique à base de titanate de baryum, ainsi qu'un condensateur utilisant cette composition.

Elle concerne plus particulièrement une composition céramique ayant une faible variation relative de capacité dans une très large gamme de température lui permettant d'atteindre la classe BX.

Cette classe de composants se définit notamment par une variation relative de capacité $\Delta$ C/C entre -55°C et +125°C inférieure ou égale à ± 15 % pour un signal de 1 volt à la fréquence de 1 KHz et pour une variation relative de capacité inférieure à +15 % et à -25 % en présence d'un champ continu extérieur de l'ordre de 50 volts.

La demanderesse a déjà proposé dans le brevet français 2 522 870 des compositions satisfaisant à ces conditions. Ces compositions sont caractérisées en ce qu'elles comportent un mélange comprenant de 80 à 94 % en poids de titanate de baryum, de 1 à 3 % en poids d'oxyde de néodyme, de 0 à 4% en poids d'oxyde de bismuth, de 2 à 5 % en poids de titanate de bismuth et de 2 à 8 % en poids de fritte de verre.

Il est connu que ce type de composition permet le frittage à basse température, tout en gardant d'excellentes propriétés électriques dans une large gamme de température.

Cependant ce type de matériau fait appel à un titanate de baryum non stoechiométrique comportant un rapport molaire $TiO_2/BaO$ compris entre 1,06 et 1,09.

Or, la non reproductibilité des titanates de baryum ainsi élaborés conduit à des fluctuations importantes tant au niveau des propriétés électriques que de l'aptitude au frittage de ces compositions.

D'autre part, la présence de phases mal définies à base de bismuth entraîne le plus souvent des instabilités de la céramique lors des essais de vieillissement ou lors de traitements agressifs. En effet, le bismuth est facilement réductible, ce qui entraîne des modifications importantes des caractéristiques électriques. Il est donc important de stabiliser le bismuth dans des édifices cristallins définis et stables vis-à-vis des traitements ultérieurs du diélectrique.

La présente invention a pour but de remédier à ces inconvénients en proposant une composition dans laquelle certains des éléments constitutifs ont été stabilisés afin d'assurer une meilleure reproductibilité au matériau céramique.

La présente invention a donc pour objet des compositions comportant 80 % à 93,5 % en poids de titanate de baryum, de 1 % à 5 % en poids de titanate de bismuth, de 0,5 % à 3 % en poids d'oxyde de néodyme, de 0 à 0,5 % en poids d'oxyde de zinc, de 0 à 0,25 % en poids de nitrate de manganèse et de 5 à 15 % en poids d'une phase stabilisée de structure $Ba(Bi_{1-x}Pb_x)_4Ti_4O_{15}$ ou $Ba_2(Bi_{1-x}Pb_x)_4 Ti_5O_{18}$, x variant de 0 à 0,3. L'ensemble est choisi pour faire 100 % en poids.

De préférence la chamotte de titanate de baryum est choisie de telle manière que le rapport de stoechiométrie $TiO_2/BaO$ soit compris entre 0,99 et 1,03 et plus particulièrement proche de 1,01. D'autre part, le titanate de bismuth est de la forme $Bi_2O_3$, 1,5 $TiO_2$ ou $Bi_2O_3$, 2$TiO_2$.

La phase $Ba(Bi_{1-x}Pb_x)_4Ti_4O_{15}$ comporte un rapport molaire $TiO_2/BaO$ compris entre 3,7 et 4, 2. La phase $Ba_2(Bi_{1-x}Pb_x)_4Ti_5O_{18}$ comporte un rapport molaire compris entre 2,3 et 2,6.

Comme on le remarquera, les compositions de la présente invention n'utilisent plus de fondant ou fritte de verre, ni d'oxyde de bismuth $Bi_2O_3$.

Conformément à l'invention, le bismuth est stabilisé dans les structures suivantes :
$Ba(Bi_{1-x}Pb_x)_4 Ti_4O_{15}$, x variant de 0 à 0,3 ou
$Ba_2(Bi_{1-x}Pb_x)_4 Ti_5O_{18}$, x variant de 0 à 0,3.

Lesdites phases sont synthétisées au préalable à partir des oxydes de baryum, de bismuth, de plomb et de titane qui après mélange intime sont calcinés à haute température.

Le titanate de baryum, le titanate de bismuth, les structures précitées $Ba (Bi_{1-x}Pb_x)_4 Ti_4 O_{15}$ et/ou $Ba_2(Bi_{1-x}Pb_x)_4 Ti_5O_{18}$ et les adjuvants habituels tels l'oxyde de zinc, l'oxyde de manganèse, l'oxyde de néodyme sont ensuite mélangés et la composition ainsi obtenue peut être mise en forme par la technologie du coulage afin d'obtenir des condensateurs multicouches. Les électrodes internes de ces condensateurs multicouches seront avantageusement constituées d'un alliage de palladium et d'argent comportant en poids 70 % d'argent.

Les condensateurs sont ensuite frittés à une température de 1130°C sous air.

Comme on le verra ci-après, les compositions ainsi élaborées, présentent des propriétés électriques excellentes dans une très large gamme de l'empérature.

D'autres caractéristiques et avantages de la présente invention apparaîtront à la lecture des exemples de réalisation suivants.

Exemple 1:
On réalise une chamotte de titanate de baryum dont le rapport de stoechiométrie est de 1,02, par mélange de l'oxyde de titane et du carbonate de baryum et calcination à haute température.

La phase $Ba_2 (Bi_{1-x}Pb_x)_4 Ti_5 O_{18}$ est obtenue en mélangeant du carbonate de baryum $BaCO_3$, de l'oxyde de bismuth $Bi_2O_3$, de l'oxyde de titane $TiO_2$ et de l'oxyde de plomb PbO dans le rapport suivant : 2 $BaCO_3$ ; 1,6

$Bi_2O_3$ ; O,8 PbO et 5 $TiO_2$. Le broyage est conduit pendant 24 heures dans un broyeur contenant 45 % en poids de billes de zircone et 10 % en poids d'eau désionisée, pour 45 % en poids d'oxydes. La barbotine est séchée et la poudre calcinée à des températures comprises entre 800°C et 1050°C et plus particulièrement vers 850°C pendant deux heures.

La composition retenue comprend en poids :
88,08 % de $BaTiO_3$ ($TiO_2/BaO = 1,02$)
2,69 % de titanate de bismuth
7,25 % de $Ba_2(Bi_{0,8}Pb_{0,2})_4 Ti_5O_{18}$
1,66 % de $Nd_2O_3$
0,10 % de ZnO
0,22 % de nitrate de manganèse.

Les constitutants sont mélangés pendant 15 heures dans une jarre qui contient 2kg de poudres, 3 kg de billes de zircone et 1,6 d'eau désionisée.

La poudre ainsi obtenu après séchage (2 kg) est ensuite mélangée dans une jarre en porcelaine avec 7 kg de billes de zircone, 2 litres de solvant (trichloréthyléne), 200 g de polymétacrylate de méthyle. L'ensemble de ces constituants est broyé pendant 15 heures. La barbotine obtenue est coulée sur un support rigide et lisse puis séchée afin d'obtenir une feuille plastique de céramique. A l'aide de cette feuille de céramique, on réalise des condensateurs multicouches constitués d'un empilement alterné de couches diélectriques céramiques et d'électrodes métalliques. Celles-ci sont déposées sur les feuilles de céramique selon la technique bien connue de la sérigraphie. Elles sont constituées d'un alliage palladium-argent comportant 70 % en poids d'argent.

Les condensateurs ainsi réalisés comportent 21 couches métallisées ayant des fonctions d'armatures, les couches de rang pair et les couches de rang impair étant respectivement reliées entre elles après frittage par l'intermédiaire de terminaisons. Les condensateurs sont frittés sous air à une température proche de 1130°C. Après dépôt des terminaisons et cuisson à basse température, les multicouches sont testés électriquement et les résultats obtenus sont rassemblés dans le tableau 1. Dans ce tableau, les valeurs de la capacité C, du facteur de pertes tg $\delta$ et de la constante diélectrique $\in$ ont été mesurées à 20° C. Le facteur de pertes a été relevé pour une tension de 1 volt à 1 kHz, la résistance d'isolement Ri pour une tension de 100 V. $(\Delta C/C)_1$ représente la variation relative de capacité en fonction de la température, e l'épaisseur de la couche céramique et $(\Delta C/C)_2$ l'effet de tension sous 63 V continu.

## TABLEAU 1

| | | |
|---|---|---|
| C (nF) | | 70,6 |
| tg $\delta$ $(\times 10^{-4})$ | | 260 |
| Ri $(G\Omega)$ | | 250 |
| $(\Delta C/C)_1$ | à -55°C | -11,3 % |
| | à + 125°C | -10,2 % |
| $\mathcal{E}$ | | 2 100 |
| e $(\mu)$ | | 25 |
| $(\Delta C/C)_2$ | à - 55°C | -27,8 % |
| | à + 125°C | - 27,6 % |

Dans le tableau 1 ci-dessus, on peut constater que le diélectrique selon l'invention ainsi que les condensateurs réalisés à partir de ce diélectrique possèdent une constante diélectrique élevée et une très bonne stabilité en fonction de la température.

Les diélectriques ainsi constitués présentent l'avantage de posséder une stabilité très grande lors des essais d'endurance.

Les essais d'endurance ont été menés sur 20 pièces, les conditions de l'expérience étant les suivantes :
- durée de l'essai : 2 000 heures,

- température : + 125°C,
- tension continue aux bornes : 95 V.

Aucun défaut n'a pu être relevé après ces 2 000 heures d'essai.

**Exemple 2 :**

On réalise une chamotte de titanate de baryum dont le rapport de stoechimétrie est de 1,03.

La préparation de la phase de $Ba_2(Bi_{0,8}Pb_{0,2})_4 Ti_5 O_{18}$ est conduite de façon identique à celle décrite à l'exemple 1.

La composition retenue comprend en poids :

84,97 % de $BaTiO_3$ ($TiO_2/BaO = 1,03$)

2,98 % de titanate de bismuth

9,5% de $Ba_2(Bi_{0,8}Pb_{0,2})_4Ti_5O_{18}$

1,82 % de $Nd_2O_3$

0,50 % de $ZnO$

0,23 % de nitrate de manganèse.

La composition, outre un titanate de baryum de stoéchimétrie 1,03, présente un taux de $Ba_2(Bi_{0,8}Pb_{0,2})_4 Ti_5O_{18}$ plus élevé que celui de l'exemple 1.

## TABLEAU 2

| | |
|---|---|
| C (nF) | 53 |
| $tg\delta$ ($\times 10^{-4}$) | 110 |
| Ri (G$\Omega$) | 200 |
| $(\Delta C/C)_I$ à $-55°C$ | $-9,4\%$ |
| à $+125°C$ | $-6,2\%$ |
| $\varepsilon$ | 1 800 |
| e ($\mu$) | 25 |

Le mélange des différents constituants et l'obtention de feuilles céramiques par la technologie de coulage sont identiques à ceux de l'exemple 1. Après frittage à 1130°C, les multicouches obtenus sont testés électriquement après dépôt des terminaisons.

Les résultats obtenus sont présentés dans le tableau 2.

D'après le tableau 2, on peut constater que le diélectrique, malgré une constante diélectrique plus faible que celle obtenue avec le diélectrique de l'exemple 1, présente un degré de frittabilité suffisant et une bonne stabilité en température.

**Exemple 3:**

On réalise une chamotte de titanate de baryum dont le rapport de stoechimétrie est de 1.

La préparation de la phase $Ba_2(Bi_{0,8}Pb_{0,2})_4 Ti_5O_{18}$ est conduite de façon identique à celle décrite à l'exemple 1.

85,4 % de $BaTiO_3$ ($TiO_2/BaO = 1$)

2,99 % de titanate de bismuth

9,05 % de $Ba_2(Bi_{0,8}Pb_{0,2})_4(Ti_5O_{18}$

1,83 % de $Nd_2O_3$

0,50 % de $ZnO$

0,23 % de nitrate de manganèse.

La composition présente un taux de $Ba_2(Bi_{0,8}Pb_{0,2})_4Ti_5O_{18}$ voisin de celui cité à l'exemple 2.

Le mélange des différents constituants et l'obtention de feuilles céramiques par la technologie de coulage sont réalisés de manière identique à celle décrite à l'exemple 1.

Après frittage à 1130°C, les multicouches obtenus sont testés électriquement après dépôt des terminaisons.

Les capacités mesurées sur 20 pièces sont peu dispersées autour de la valeur moyenne de 66nF.

Les résultats obtenus sont présentés au tableau 3.

## TABLEAU 3

| | |
|---|---|
| C (nF) | 66 |
| tg $\delta$ (X10$^{-4}$) | 260 |
| Ri (G$\Omega$) | 300 |
| ($\Delta$C/C)$_1$ à $-55°$C | $-12\%$ |
| à $+125°$C | $-0,2\%$ |
| $\varepsilon$ | 2 200 |

Exemple 4:

On réalise une chamotte de titanate de baryum dont le rapport de stoéchiométrie est de 1,02.

La préparation de la phase $Ba_2(Bi_{0,8}Pb_{0,2})_4Ti_5O_{18}$ est conduite de façon identique à celle décrite à l'exemple 1.

La composition retenue comprend en poids :

84,97 % de $BaTiO_3$ ($TiO_2/BaO = 1,02$)

2,98 % de titanate de bismuth

9,50 % de $Ba_2(Bi_{0,8}Pb_{0,2})_4 Ti_5O_{18}$

1,82 % de $Nd_2O_3$

0,50 % de ZnO

0,23 % de nitrate de manganèse.

Cette composition est identique, dans les proportions des constituants à celle de l'exemple 2. Seul change le rapport stoechiométrique $TiO_2/BaO$ du titanate de baryum.

Le mélange des différents constituants et l'obtention de feuilles céramiques par la technologie de coulage sont identiques à ceux de l'exemple 1.

Après frittage à 1130°C, les multicouches obtenus sont testés électriquement après dépôt des terminaisons.

Les résultats obtenus sont présentés au tableau 4.

## TABLEAU 4

| | |
|---|---|
| C (nF) | 72,8 |
| tg $\delta$ (X10$^{-4}$) | 196 |
| Ri (G$\Omega$) | 300 |
| ($\Delta$C/C)$_1$ à $-55°$C | $-6\%$ |
| à $+125°$C | $-12\%$ |
| $\varepsilon$ | 2 500 |
| e ($\mu$) | 26 |
| ($\Delta$C/C)$_2$ à $-55°$C | $-25\%$ |
| à $+125°$C | $-27\%$ |

Les diélectriques ainsi constitués présentent l'avantage de posséder une stabilité très grande lors des essais d'endurance et de chaleur humide sous tension.

Les essais d'endurance ont été menés sur 20 pièces, les conditions de l'expérience étant les suivantes :
- durée de l'essai : 2 000 heures,
- température : 125°C
- tension continue aux bornes : 95V

On observe aucun défaut après 2 000 heures d'essai. La variation relative de capacité est de -1 % en moyenne par rapport à la capacité initiale ; les résistances d'isolement mesurées sous 100 volts n'ont pas varié.

Des essais en chaleur humide sous tension ont également été effectués, les conditions de l'expérience étant les suivantes :
- durée de l'essai : 56 heures,
- température : 70°C,
- tension continue aux bornes : 63 V,
- humidité relative : 95 %.

On observe aucun défaut après 56 jours d'essai. La variation relative de capacité est de -2 % en moyenne par rapport à la capacité initiale. Les résistances d'isolement mesurées sous 100 volts n'ont pas varié.

L'utilisation d'une phase stabilisé de structure $(Ba(Bi_{1-x}Pb_x)_4Ti_4O_{15}$ à la place de $Ba_2(Bi_{1-x}Pb_x)_4Ti_5O_{18}$ ou en association avec cette phase conduit à des résultats comparables. Cette phase peut se préparer à partir des mêmes produits.

## Revendications

1 - Composition céramique diélectrique, caractérisée en ce qu'elle est constituée d'un mélange comportant de 80 à 93,5 % en poids de titanate de baryum, de 1 à 5 % en poids de titanate de bismuth, de 0,5 à 3 % en poids d'oxyde de néodyme, de 0 à 0,75 % en poids d'adjuvants, et de 5 à 15 % en poids d'une phase stabilisée du type $Ba(Bi_{1-x}Pb_x)_4 Ti_4O_{15}$ et/ou $Ba_2(Bi_{1-x}Pb_x)_4Ti_5O_{18}$, x variant de 0 à 0,3, l'ensemble étant choisi pour faire 100 % en poids.

2 - Composition céramique selon la revendication 1, caractérisée en ce que le titanate de baryum comporte un rapport molaire $TiO_2/BaO$ compris entre 0,99 et 1,03.

3 - Composition céramique selon l'une des revendications 1 ou 2 caractérisée en ce que les phases stabilisées $Ba(Bi_{1-x}Pb_x)_4 Ti_4O_{15}$ ou $Ba_2(Bi_{1-x}Pb_x)_4 Ti_5O_{18}$ sont synthétisées à partir de carbonate de baryum, d'oxydes de bismuth, de titane et de plomb qui, après mélange sous des proportions déterminées, sont calcinées à haute température.

4 - Composition céramique selon l'une quelconque des revendications 1 à 3, caractérisée en ce que la phase $Ba(Bi_{1-x}Pb_x)_4 Ti_4O_{15}$ comporte un rapport molaire $TiO_2/BaO$ compris entre 3,7 et 4.2.

5 - Composition céramique selon une quelconque des revendications 1 à 4, caractérisée en ce que la phase $Ba_2(Bi_{1-x}Pb_x)_4 Ti_5O_{18}$ comporte un rapport molaire $TiO_2/BaO$ compris entre 2,3 et 2,6.

6 - Composition céramique selon l'une quelconque des revendications 1 à 5, caractérisée en ce que le titanate de bismuth est de la forme $Bi_2O_3$, $1,5 TiO_2$ ou de la forme $Bi_2O_3$, $2 TiO_2$ .

7 Composition céramique, selon l'une quelconque des revendications 1 à 6, caractérisée en ce que les adjuvants sont choisis parmi les oxydes de zinc, les nitrates de manganèse et leur mélange.

8 - Composition céramique selon la revendication 7, caractérisée en ce qu'elle comporte de 0 à 0,25 % en poids de nitrate de manganèse.

9 - Composition céramique selon l'une quelconque des revendications 7 et 8, caractérisée en ce qu'elle comporte de 0 à 0,5 % en poids d'oxyde de zinc.

10 - Condensateur électrique comportant au moins une couche diélectrique et au moins deux électrodes, caractérisé en ce que la couche diélectrique est constituée par une composition selon l'une quelconque des revendications 1 à 9.

11 - Condensateur électrique selon la revendication 10, caractérisé en ce qu'il comporte une pluralité d'électrodes métalliques séparées par des couches diélectriques, les électrodes métalliques de rang pair et de rang impair étant respectivement reliées entre elles, les électrodes étant constituées d'un mélange de palladium et d'argent comportant au moins 70 % en poids d'argent.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| D,A | EP-A-0 088 009 (L.C.C.-C.I.C.E.) * Revendications 1,6-13 * | 1-11 | C 04 B   35/46 H 01 G    4/12 H 01 B    3/12 |
| A | CHEMICAL ABSTRACTS, vol. 94, no. 12, 23 mars 1981, page 736, résumé no. 94695w, Columbus, Ohio, US; & JP-A-80 124 224 (NIPPON TELEGRAPH AND TELEPHONE PUBLIC CORP.) 25-09-1980 | 1-11 | |
| A | JAPANESE JOURNAL OF APPLIED PHYSICS, vol. 20, no. 4, mai 1981, pages 139-142, Tokyo, JP; N. YAMAOKA et al.: "Low temperature sintered BaTiO3 ceramics with Bi4Ti3O12 added" * Page 141, colonne de gauche, en bas * | 1-11 | |
| A | FR-A-2 166 411  (N L INDUSTRIES) * Revendications 1-3 * | 1-11 | DOMAINES TECHNIQUES RECHERCHES (Int. Cl.4)<br><br>C 04 B H 01 G H 01 B |
| A | EP-A-0 106 401  (N.V. PHILIPS' GLOEILAMPENFABRIEKEN) * Revendications 1-5 * | 1-11 | |

Le présent rapport de recherche a été établi pour toutes les revendications

| Lieu de la recherche | Date d'achèvement de la recherche | Examinateur |
|---|---|---|
| LA HAYE | 09-11-1987 | SCHURMANS H.D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82